# EUROPÄISCHE PATENTSCHRIFT

(11) **EP 1 591 870 B1**
(45) Veröffentlichungstag und Bekanntmachung des Hinweises auf die Patenterteilung: **13.08.2014**
(21) Anmeldenummer: 05102855.3
(22) Anmeldetag: 12.04.2005
(51) Int. Cl.: G06F 1/16

(54) **Stützelement und Anordnung zur Abstützung eines Displays gegen ein Gehäuse**
Supporting element and arrangement for supporting a display against a casing
Elément de support et arrangement pour maintenir un écran contre un boitier

(30) Priorität: 27.04.2004 DE 102004020763
(43) Veröffentlichungstag der Anmeldung: 02.11.2005
(73) Patentinhaber: Continental Automotive GmbH, 30165 Hannover (DE)
(72) Erfinder: Falkner, Roland, 91220 Schnaittach (DE); Schweiger, Florian, 93309 Kehlheim (DE)

(56) Entgegenhaltungen:
- EP-A2- 0 884 713
- DE-U1- 20 110 595
- US-A- 5 568 357

## Beschreibung

Die Erfindung betrifft ein Stützelement nach dem Oberbegriff des Anspruchs 1 und eine Anordnung zur Abstützung eines Displays gegen ein Gehäuse nach dem Oberbegriff des Anspruchs 9, wobei bei der Anordnung das Display an dem Gehäuse mit mindestens einer Befestigungseinheit befestigt ist und wobei die Befestigungseinheit mit einer Auflagefläche das Display gegen das Gehäuse drückt.

In der heutigen Zeit werden verstärkt mobile elektronische Geräte mit integrierter Displayanzeige verwendet, so beispielsweise in Form von Navigations-, Audio- oder Multimediageräten in Kraftfahrzeugen oder als tragbare Geräte, wie Laptops, PDA oder Mobilfunkgeräte, im Bereich der mobilen Informationsverarbeitung und Kommunikation. An diese mobilen Anzeigegeräte werden hohe Anforderungen hinsichtlich der Vibrationsfestigkeit gestellt, um deren ausreichende Lebensdauer trotz der gegenüber stationären Anzeigegeräten erhöhten mechanischen Belastung zu gewährleisten. Hohen mechanischen Beanspruchungen unterliegen des Weiteren die im Industrie- und Kraftwerksanlagenbau verwendeten Anzeigegeräte.

Bei bisher bekannten Befestigungen einer Displayanzeige innerhalb eines Gerätegehäuses werden vorzugsweise Schraub- oder Klemmverbindungen verwendet, die einen den Randbereich des Displays umfassenden oder das Display insgesamt überdeckenden Rahmen mit übrigen Teilen des Gehäuses verbinden und dabei das Display gegen das Gehäuse pressen bzw. drücken. Um eine ausreichende Vibrationsfestigkeit zu gewährleisten, müssen die Abmessungen des Rahmens möglichst genau an die jeweilige Displaystärke angepasst sein.

Aus der EP 0 884 713 A2 ist ein elastisches Stützelement zur Befestigung eines Displays bekannt. Das elastische Stützelement ist zwischen Rahmenteilen eines Gehäuses angeordnet.

Aus der DE 201 10 595 A1 ist eine Haltevorrichtung mit Lagereinheiten zur schwimmenden Lagerung eines Flachbildschirms bekannt, wobei eine Lagereinheit zumindest ein Element zur elastischen Positionierung und zumindest ein Element zur Vibrationsdämpfung aufweist.

Aufgabe der vorliegenden Erfindung ist es, die bekannte Art der Befestigung eines Displays in einem Gehäuse unter dem Gesichtspunkt der Vibrationsfestigkeit zu verbessern.

Diese Aufgabe wird mit einem Stützelement nach Anspruch 1 und einer Anordnung nach Anspruch 9 gelöst.

Das erfindungsgemäße Stützelement besteht aus einem Boden-, einem Seiten- und einem Deckkörper, wobei der Seitenkörper aus einem elastischen Material ausgeführt ist und den Boden- und den Deckkörper miteinander verbindet. Im kräftefreien Zustand befindet sich der Deckkörper in einer erhabenen Position gegenüber dem Bodenkörper, d.h. der Seitenkörper stützt den Deckkörper gegenüber dem Bodenkörper nach oben ab. Im eingebauten Zustand des Displays in dem Gehäuse liegt der Deckkörper des Stützelementes an dem Display an, während der Bodenkörper direkt oder indirekt mechanisch mit dem Gehäuse verbunden ist. Der Seitenkörper des Stützelementes wird im eingebauten Zustand durch ein Andrücken des Displays an das Gehäuse elastisch verformt, so dass der Deckkörper in Richtung Bodenkörper verschoben ist. Auf diese Weise wird das Display durch das Stützelement elastisch gegenüber dem Gehäuse abgestützt, was die Übertragung von Vibrationen vom Gehäuse auf das Display reduziert und damit sowohl deren mechanische Beanspruchung als auch die Entwicklung von Vibrationsgeräuschen vermindert.

Das Stützelement ist als Teil einer Schaltmatte ausgeführt. Schaltmatten kommen insbesondere bei mit einem Bedienteil versehenen elektronischen Geräten zum Einsatz, um die Betätigung von Bedienknöpfen, wie Drucktasten oder Kippschaltern, in elektrische Signale umzusetzen. Die Schaltmatten werden im Allgemeinen durch Vulkanisieren aus kunststoffelastischem Material hergestellt. Eine zusätzliche Ausformung eines oder mehrerer erfindungsgemäßer Stützelemente aus dieser Schaltmatte verursacht kaum weiteren Aufwand. Die Verwendung einer Schaltmatte mit integriertem Stützelement ist also insbesondere bei elektronischen Geräten von Vorteil, die sowohl mit einem Display als auch mit Bedienelementen versehen sind, da damit die Funktionen der Erfassung der Schaltbetätigungen sowie der Abstützung des Displays in einem einzigen Bauteil integriert sind. Somit entfallen nicht nur zusätzliche Bauteile sondern es sind auch weniger Arbeitsschritte bei der Montage von Display und Gehäuse erforderlich.

Die Verwendung eines erfindungsgemäßen Stützelementes mit elastischem Seitenkörper bietet den Vorteil, dass auch bei variierender Displaystärke oder bei Toleranzen in den Gehäuseabmessungen ein ausreichender Anpressdruck und damit eine genügende Vibrationsfestigkeit gewährleistet werden können. Bisher muss bei der Montage von Anzeigegeräten mit der bekannten Befestigungsart beispielsweise unterschieden werden zwischen dem Einbau eines alleinigen Displays und dem Einbau eines Displays inklusive Touchpanel. Die unterschiedlichen Stärken dieser Displays benötigen unterschiedliche Rahmenkonstruktionen, um eine ausreichend stabile Verbindung zum Gehäuse gewährleisten zu können. Das erfindungsgemäße Stützelement kann dagegen ohne Unterschied bei beiden Displayarten verwendet werden, da es sich aufgrund seiner Elastizität an die jeweilige Displaystärke anpasst, was zu einer Reduzierung der Fertigungskosten beiträgt.

Bei der erfindungsgemäßen Anordnung zur Abstützung eines Displays gegen ein Gehäuse wird das Stützelement zwischen dem Display und der Auflagefläche der Befestigungseinheit angeordnet. Als Befestigungseinheit können beispielsweise Klammern oder Halterungen dienen, deren Auflagefläche nur gerade so groß wie die Fläche des bzw. der Deckkörper der Stützelemente sein muss. Diese Halterungen können mit dem Gehäuse verschraubt, verlötet oder verklebt sein oder direkt daran angeformt sein. Die bisher verwendeten Rahmen entfallen dabei vollständig, was nicht nur den Materialbedarf reduziert sondern auch den Platzbedarf der gesamten Displayanordnung.

Grundsätzlich kann das Stützelement beliebig geometrisch ausgestaltet sein. In einer bevorzugten Ausführung ist es als rotationssymmetrischer Körper ausgeformt, d.h. sowohl der Deckkörper als auch der Seiten- und Bodenkörper weisen einen kreisrunden Grundriss auf. Bei dieser Formgestaltung werden die Kräfte gleichmäßig im Stützelement verteilt, d.h. es wird eine gleichmäßige Verformung des Seitenkörpers im eingebauten Zustand gewährleistet. Ähnlich vorteilhaft verhält sich ein Stützelement, das einen polygonförmigen Querschnitt mit hoher Anzahl an Ecken aufweist. Entsprechend der jeweiligen speziellen Anforderungen kann natürlich auch eine Kombination der verschiedenen Querschnittarten gewählt werden.

Je nach der von dem Stützelement aufzunehmenden Anpresskraft sowie der gewünschten Verformbarkeit kann das Stützelement als Vollkörper oder als Hohlkörper ausgeführt sein. Als Hohlkörper kann das Stützelement im Deck- und/oder im Bodenbereich geschlossen sein, was im speziellen Fall bedeutet, dass der Seitenkörper als Hohlkörper und der Deck- und/oder der Bodenkörper als Vollkörper ausgeführt sind.

Deckkörper und Bodenkörper können aus einem unelastischen Material sein, werden aber bevorzugt aus demselben elastischen Material ausgeführt wie der Seitenkörper, um die Material- und Produktionskosten gering zu halten. Als elastische Materialien eignen sich insbesondere kunststoffelastische Materialen, wie beispielsweise Silikon, die einfach zu verarbeiten sind.

In einer besonderen Ausgestaltung werden lediglich der Seiten- und der Deckkörper aus der Schaltmatte ausgeformt, während der Bodenkörper dem den Seitenkörper umgebenden Teil der Schaltmatte entspricht, d.h. der Bodenkörper wird nicht extra ausgeformt sondern ist Teil der Schaltmattengrundfläche.

In einer bevorzugten Ausgestaltung der erfindungsgemäßen Anordnung ist die Schaltmatte, in der das Stützelement integriert ist, auf einer Leiterplatte aufgebracht, welche selbst als Teil einer Befestigungseinheit zum Befestigen des Displays dient. Über diese Leiterplatte, welche beispielsweise mit dem Gehäuse verschraubt oder verklemmt sein kann, wird demnach eine indirekte mechanische Verbindung zwischen dem Stützelement und dem Gehäuse hergestellt. Das Stützelement liegt dabei mit seinem Bodenkörper auf der Leiterplatte auf. Diese Ausgestaltung bietet den Vorteil, das zusätzliche Bauteile zur Befestigung des Stützelementes, wie die beispielhaft genannten verschraubten Halterungen, entfallen, da die Leiterplatte ohnehin im Gehäuse befestigt sein muss.

Bevorzugt drückt die Leiterplatte das Display von seiner Rückseite her gegen das Gehäuse und dabei insbesondere gegen eine mit einer Blendenöffnung versehene Frontpartie des Gehäuses. Alternativ kann das Stützelement auch in einem Seitenbereich oder in einem nicht sichtbaren Front- bzw. Randbereich des Displays angeordnet sein.

In dem Fall, dass in das Gehäuse des elektronischen Gerätes auch Bedienelemente integriert sind, reicht die Schaltmatte vorteilhafterweise mit mindestens einem Seitenbereich über die Fläche des Displays hinaus und weist in diesem Seitenbereich elektrisch leitfähige Kontaktflächen auf, die von den Bedienelementen betätigbar sind. Die Bedienelemente können bei dieser Ausgestaltung direkt neben dem sichtbaren Bereich des Displays, also neben der Blendenöffnung in der Frontpartie des Gehäuses, angeordnet werden, wodurch sich eine kompakte, Platz sparende Anordnung ergibt.

Zur weiteren Verbesserung der Stabilität der erfindungsgemäßen Anordnung ist in einer besonderen Ausgestaltung auf der Rückseite der Frontpartie des Gehäuses ein starr ausgeführtes Positionierungselement angebracht, gegen welches das Display mit einer ersten Seitenkante gedrückt wird. Auf diese Weise ist die genaue Position des Displays hinter der Blendenöffnung in einer Richtung festgelegt. Verwendet man ein zweites starres Positionierungselement und ordnet dieses so auf der Rückseite der Frontpartie des Gehäuses an, dass das Display mit einer weiteren Seitenkante dagegen drückt, so wird auch eine weitere Bewegungsrichtung des Displays eingeschränkt. Bei senkrecht zueinander angeordneten Positionierungselementen und einem rechtwinkligen Display ist die Position des Displays bereits genau festgelegt, so dass die Blendenöffnung dann so groß wie möglich gewählt werden kann, ohne dass ein unerwünschtes Sichtbarwerden nicht beleuchteter und damit nicht zur eigentlichen Anzeigefläche gehörender Bereiche des Displays befürchtet werden muss.

Diese Ausgestaltung kann noch verbessert werden, indem zusätzlich zu dem bzw. den starr ausgeführten Positionierungselementen ein elastisches Positionierungselement auf der Rückseite der Frontpartie des Gehäuses angebracht wird. Dieses wird so angeordnet, dass das Display mit einer weiteren, im Fall nur eines starren Positionierungselementes, mit einer zweiten Seitenkante gegen das elastische Positionierungselement drückt. Wählt man eine dem starren Positionierungselement gegenüberliegende Seitenkante, so wird das Display zwischen einem starren und einem elastischen Positionierungselement eingeklemmt. Damit wird neben der genauen Positionierung hinter der Blendenöffnung ein besonders sicherer Halt in dieser Richtung gewährleistet. Wählt man bei einem rechteckförmigen Display noch ein weiteres elastisches Positionierungselement und ordnet dieses in rechtem Winkel zu dem ersten elastischen Positionierungselement an, so wird das Display in den Bewegungsrichtungen parallel zur Rückseite der Frontpartie des Gehäuses fest fixiert und sicher gehalten.

Die Erfindung wird nachfolgend anhand der Ausführungsbeispiele und der Zeichnung näher erläutert. Es zeigen:
- Fig. 1: bekannte Anordnung zur Abstützung eines Displays gegen ein Gehäuse mittels Rahmen;
- Fig. 2: zwei Ausgestaltungen eines Stützelementes;
- Fig. 3: Anordnung aus Gehäuse, Display, Schaltmatte mit integrierten Stützelementen und Leiterplatte;
- Fig. 4: Rückseite einer Frontpartie mit Positionierungselementen;
- Fig. 5: Explosionsdarstellung eines elektronischen Gerätes.

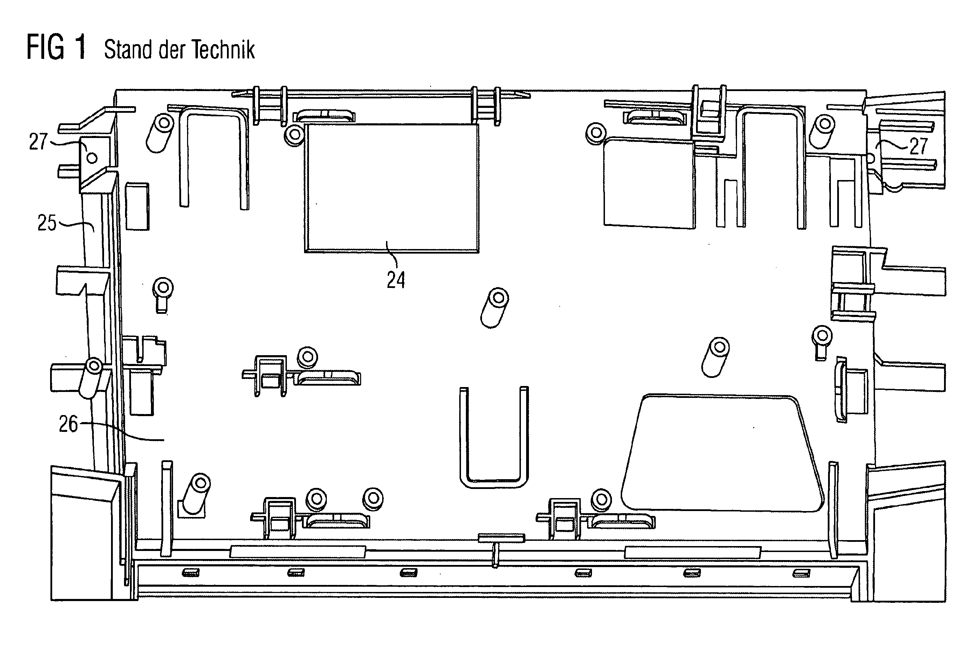

In Figur 1 ist eine bekannte Anordnung zur Abstützung eines Displays 24 (dunkelgrau) gegen ein Gehäuse 25 (schwarz) mit Hilfe eines Rahmens 26 (hellgrau) zu sehen. Der Rahmen 26 ist an einigen Stellen durchbrochen, weshalb Teile des Displays 24 sichtbar sind. Der Rahmen 26 bedeckt ansonsten vollständig die Rückseite des Displays 24 und ist an zwei Stellen 27 mit dem Gehäuse 25 verschraubt.

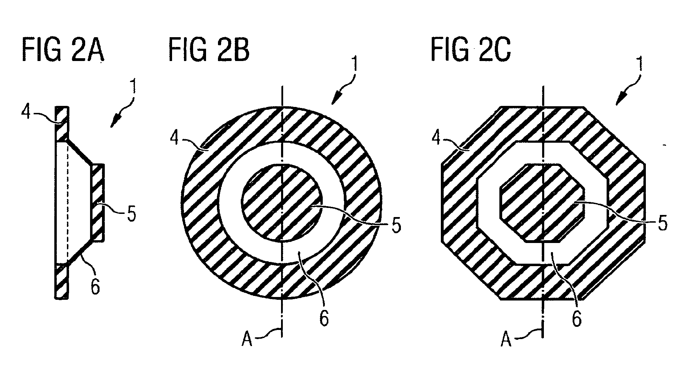

In den Figuren 2a bis 2c sind zwei mögliche Ausgestaltungen eines Stützelementes 1 dargestellt. Figur 2a zeigt dabei den identisch aussehenden, jeweils an der Achse A entstehenden Querschnitt der in den Figuren 2b und 2c in ihrer Draufsicht abgebildeten Ausführungsformen eines Stützelementes 1. Zu erkennen sind jeweils der Bodenkörper 4, der Seitenkörper 6 und der Deckkörper 5. In der Ausgestaltung nach Figur 2b ist der Deckkörper 5 als sehr kurzer Vollzylinder ausgeführt. An dessen Unterseite schließt sich ein Hohlkörper in Form eines Kegelstumpfes an, welcher den Seitenkörper 6 bildet. Dieser geht über in einen kreisringförmigen Bodenkörper 4, der ebenso wie der Deckkörper 5 als Vollkörper ausgebildet ist.

Einen gleichen Querschnitt entsprechend Fig. 2a erhält man bei einer Ausgestaltung eines Stützelementes 1 nach Figur 2c. Dort wird der Deckkörper 5 von einem Vollkörper mit achteckigem Grundriss gebildet, an den sich wieder ein Seitenkörper 6 in Form eines Kegelstumpfes anschließt. Der Bodenkörper 4 wird von einem als Vollkörper ausgebildeten Ring gebildet, der einen achteckigen Grundriss aufweist. Anstelle eines Achtecks kann jedoch auch jede beliebige andere Polygonform gewählt werden, wobei eine höhere Anzahl von Ecken eine bessere Verteilung der auf das Stützelement wirkenden Kräfte bewirkt.

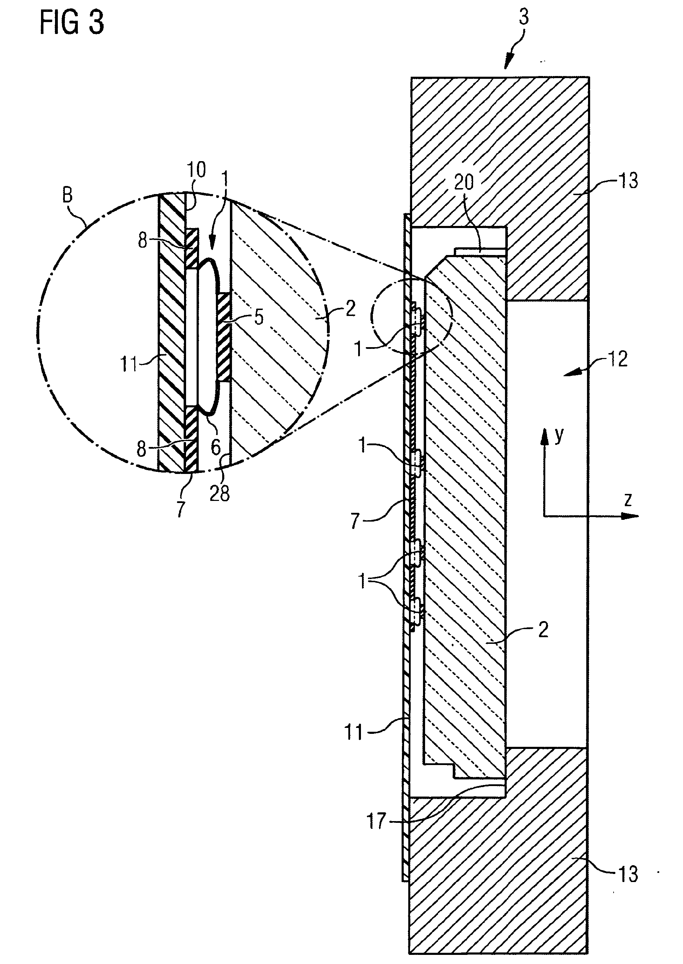

Figur 3 zeigt einen Querschnitt durch die Seitenansicht eines Gehäuses 3 mit eingebautem Display 2 sowie einen zugehörigen Vergrößerungsausschnitt B. In der Seitenansicht ist das Gehäuse 3 mit einer in einer Frontpartie 13 eingelassenen Blendenöffnung 12 dargestellt. Das Display 2 wird gegen die Rückseite 17 der Frontpartie 13 und damit gegen die Blendenöffnung 12 gedrückt und zwar durch eine Leiterplatte 11. Die Leiterplatte 11 ist mittels nicht dargestellter Schraub-, Klemm-, Löt- oder Klebverbindung an dem Gehäuse 3 befestigt und bildet in Verbindung mit dem bzw. den Verbindungselementen eine Befestigungseinheit 9, die das Display 2 durch Anpressdruck in der Blendenöffnung 12 hält und damit an dem Gehäuse 3 befestigt. Auf der Leiterplatte 11 ist eine Schaltmatte 7 aus Silikon aufgebracht, aus der unter anderem vier Stützelemente 1 ausgeformt sind.

Im Vergrößerungsausschnitt B ist zu erkennen, wie sich ein Stützelement 1 entsprechend der Ausgestaltung nach den Figuren 2a und 2b im eingebauten Zustand elastisch verformt. Das Stützelement 1 besteht aus einem Deckkörper 5 mit kreisrundem Grundriss, einem Seitenkörper 6 in Form eines Kegelstumpfes und einem Bodenkörper, der durch einen den Seitenkörper 6 umgebenden, kreisringförmigen Bereich 8 der Schaltmatte 7 gebildet wird. Der Deckkörper 5 liegt direkt an der Rückseite 28 des Displays 2 an. Der Bereich 8 und damit der Bodenkörper des Stützelementes 1 liegt auf der Auflagefläche 10 der Leiterplatte 11 auf und ist über die Leiterplatte 11 indirekt mit dem Gehäuse 3 verbunden. Durch die Befestigung der Leiterplatte 11 an dem Gehäuse 3 wird das Stützelement 1 gegen das Display 2 gepresst, so dass sich der Seitenkörper 6 elastisch verformt und damit eine Anpresskraft in z-Richtung auf das Display 2 ausgeübt wird. Verglichen mit dem nicht eingebauten Zustand (Fig. 2a) wird der Deckkörper 5 durch die elastische Verformung näher an den Bodenkörper (Bereich 8) heranbewegt. Die Anpresskraft kann durch Variation der geometrischen Ausgestaltung des Seitenkörpers 6 sowie durch geeignete Wahl der Materialhärte (Shore-Härte) des Silikons an die jeweiligen Anforderungen angepasst werden.

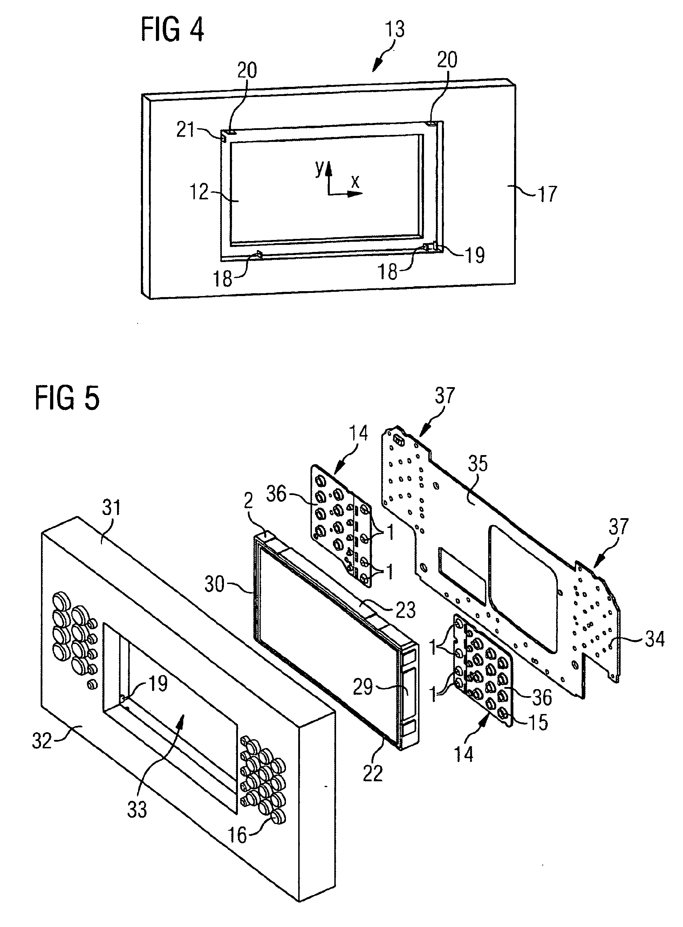

In Figur 4 ist die Rückseite 17 der Frontpartie 13 des Gehäuses 3 aus Figur 3 zu sehen. Zu erkennen sind mehrere Positionierungselemente, die an das Gehäuse 3 angeformt sind und zur Festlegung der Position des Displays 2 hinter der Blendenöffnung 12 dienen. In dem dargestellten Beispiel besteht das Gehäuse aus Spritzguss und die Positionierungselemente sind direkt daran angespritzt. Die Positionierungselemente 18 und 19 stehen senkrecht zur Rückseite 17 der Frontpartie 13 und sind starr ausgeführt, wobei die Positionierungselemente 18 einen Anschlag für das Display 2 in negativer y-Richtung bilden und das Positionierungselement 19 einen Anschlag in positiver x-Richtung darstellt. Die Positionierungselemente 20 und 21 sind elastisch, also in Form von Kunststofffedern, ausgeführt. Die elastischen Positionierungselemente 20 liegen den starren Positionierungselementen 18 gegenüber und begrenzen somit die Bewegungsrichtung des Displays 2 in positiver y-Richtung. Das elastische Positionierungselement 21 befindet sich auf der dem starren Positionierungselement 19 gegenüberliegenden Seite der Blendenöffnung und damit der gegenüberliegenden Seite des Displays 2 und begrenzt die Bewegungsrichtung des Displays 2 in negativer x-Richtung. Mit den Positionierungselementen 18 bis 21 wird das Display 2 im eingebauten Zustand fest in x- und y-Richtung fixiert. Dabei stößt das Display 2 mit seiner ersten Seitenkante 22 (vgl. Figur 5) gegen die Positionierungselemente 18, mit seiner zweiten Seitenkante 23 gegen die Positionierungselemente 20, mit seiner dritten Seitenkante 29 gegen das Positionierungselement 19 und mit seiner vierten Seitenkante 30 gegen das Positionierungselement 21. Vibrationskräfte in x- und/oder y-Richtung werden durch die elastisch ausgeführten Positionierungselemente 20 und 21 aufgenommen. Weiterhin werden die in x- oder y-Richtung wirkenden Vibrationen in Reibkräfte zwischen den Stützelementen 1 (Fig. 3) und der Rückseite 28 des Displays 2 umgesetzt, was die Positionierungselemente 18 bis 21 entlastet.

Die Explosionsdarstellung in Figur 5 zeigt ein elektronisches Gerät mit schematisiertem Gehäuse 31, in welches das Display 2 eingebaut ist und auf dessen Frontpartie 32 Bedienelemente 16 angeordnet sind. Das elektronische Gerät kann beispielsweise ein Autoradio oder ein Navigationsgerät sein. In die Frontpartie 32 ist eine Blendenöffnung 33 eingelassen, um dahinter die sichtbare Anzeigefläche des Displays 2 anzuordnen. Das Display 2 wird mittels einer Leiterplatte 35, die mit dem Gehäuse 31 verschraubt wird, an dem Gehäuse 31 befestigt. Auf der Rückseite der Frontpartie 32 angebrachte Positionierungselemente, wie das in der Blendenöffnung 33 zu sehende Positionierungselement 19, sorgen für einen genauen und sicheren Sitz des Displays 2 hinter der Blendenöffnung 33. Auf der Leiterplatte 35 sind zwei Schaltmatten 36 aufgebracht, die jeweils vier, in die Schaltmatten 36 integrierte Stützelemente 1 aufweisen. Im eingebauten Zustand, wenn die Leiterplatte 35 inklusive der auf die Bereiche 37 aufgebrachten Schaltmatten 36 auf der Rückseite des Displays 2 aufliegen, ragen die Seitenbereiche 14 der Schaltmatten 36 über das Display 2 hinaus. In diesen Seitenbereichen 14 sind die Schaltmatten 36 mit elektrisch leitfähigen Kontaktflächen 15 versehen, die auf der der Leiterplatte 35 zugewandten Seite der Schaltmatten 36 aufgebracht sind. Beim Einbau kommen die Seitenbereiche 14 direkt hinter den auf der Frontpartie 32 des Gehäuses 31 untergebrachten Bedienelementen 16 zum Liegen. Bei den Bedienelementen 16 handelt es sich in diesem Beispiel um Drucktasten. Die elektrisch leitfähigen Kontaktflächen 15 können also mit den Bedienelementen 16 betätigt, d.h. mit auf der Leiterplatte 35 aufgebrachten Kontakten 34 in Verbindung gebracht werden, so dass ein Schaltstrom fließt, der die Betätigung des jeweiligen Bedienelementes 16 anzeigt.

## Patentansprüche

1. Stützelement (1) zur Abstützung eines Displays (2) gegen ein Gehäuse (3) mit einem Bodenkörper (4) und einem Deckkörper (5), welche über einen Seitenkörper (6) aus einem elastischen Material miteinander verbunden sind, wobei der Bodenkörper (4) mit dem Gehäuse (3) direkt oder indirekt mechanisch verbunden ist, wobei der Deckkörper (5) an dem Display (2) anliegt und sich der Deckkörper (5) im nicht eingebauten Zustand des Displays (2) in dem Gehäuse (3) in einer gegenüber dem Bodenkörper (4) erhabenen Position befindet, aus welcher er im eingebauten Zustand in Richtung des Bodenkörpers (4) verschoben ist unter gleichzeitiger elastischer Verformung des Seitenkörpers (6) und **dadurch gekennzeichnet, dass** das Stützelement (1) integrierter Bestandteil einer Schaltmatte (7) ist.

2. Stützelement (1) nach Anspruch 1, **dadurch gekennzeichnet, dass** der Deckkörper (5) und/oder der Seitenkörper (6) und/oder der Bodenkörper (4) einen kreisrunden Grundriss aufweisen.

3. Stützelement (1) nach Anspruch 1, **dadurch gekennzeichnet, dass** der Deckkörper (5) und/oder der Seitenkörper (6) und/oder der Bodenkörper (4) einen polygonförmigen Grundriss aufweisen.

4. Stützelement (1) nach einem der vorhergehenden Ansprüche, **dadurch gekennzeichnet, dass** der Deckkörper (5) und/oder der Seitenkörper (6) und/oder der Bodenkörper (4) als Hohlkörper ausgeführt sind.

5. Stützelement (1) nach einem der vorhergehenden Ansprüche 1 bis 3, **dadurch gekennzeichnet, dass** der Deckkörper (5) und/oder der Seitenkörper (6) und/oder der Bodenkörper (4) als Vollkörper ausgeführt sind.

6. Stützelement (1) nach einem der vorhergehenden Ansprüche, **dadurch gekennzeichnet, dass** der Deckkörper (5) und/oder der Bodenkörper (4) aus demselben elastischen Material ausgeführt sind wie der Seitenkörper (6).

7. Stützelement (1) nach einem der vorhergehenden Ansprüche, **dadurch gekennzeichnet, dass** das elastische Material ein kunststoffelastisches Material, insbesondere Silikon, ist.

8. Stützelement (1) nach Anspruch 7, **dadurch gekennzeichnet, dass** der Seitenkörper (6) und der Deckkörper (5) aus der Schaltmatte (7) ausgeformt sind, während der Bodenkörper (4) dem den Seitenkörper (6) umgebenden Bereich (8) der Schaltmatte (7) entspricht.

9. Anordnung zur Abstützung eines Displays (2) gegen ein Gehäuse (3), wobei das Display (2) an dem Gehäuse (3) mit mindestens einer Befestigungseinheit (9) befestigt ist und wobei die Befestigungseinheit (9) mit einer Auflagefläche (10) das Display (2) gegen das Gehäuse (3) drückt, **dadurch gekennzeichnet, dass** zwischen der Auflagefläche (10) der Befestigungseinheit (9) und dem Display (2) ein Stützelement (1) nach einem der Ansprüche 1 bis 8 angeordnet ist.

10. Anordnung nach Anspruch 9, **dadurch gekennzeichnet, dass** das Stützelement (1) als Teil einer Schaltmatte (7) ausgeführt ist, wobei die Schaltmatte (7) auf einer zu einer Befestigungseinheit (9) gehörenden Leiterplatte (11) aufgebracht ist.

11. Anordnung nach Anspruch 10, **dadurch gekennzeichnet, dass** die Leiterplatte (11, 37) das Display (2) gegen eine mit einer Blendenöffnung (12, 33) versehene Frontpartie (13, 32) des Gehäuses (3, 31) drückt.

12. Anordnung nach Anspruch 11, **dadurch gekennzeichnet, dass** die Schaltmatte (36) mit mindestens einem Seitenbereich (14) über das Display (2) hinausragt und dass in dem Seitenbereich (14) mindestens eine elektrisch leitfähige Kontaktfläche (15) ausgeführt ist, die von mindestens einem in dem Gehäuse (31) integrierten Bedienelement (16) betätigbar ist, wobei bei einer Betätigung eine elektrische Verbindung zu mindestens einem auf der Leiterplatte (37) befindlichen elektrisch leitfähigen Kontakt (34) hergestellt wird.

13. Anordnung nach einem der Ansprüche 11 oder 12, **dadurch gekennzeichnet, dass** auf der dem Display (2) zugewandten Rückseite (17) der Frontpartie (13) mindestens ein starr ausgeführtes Positionierungselement (18) angebracht ist, gegen welches das Display (2) mit einer ersten seiner Seitenkanten (22) gedrückt wird.

14. Anordnung nach Anspruch 13, **dadurch gekennzeichnet, dass** auf der Rückseite (17) der Frontpartie (13) mindestens ein elastisch ausgeführtes Positionierungselement (20) angebracht ist, gegen welches das Display (2) mit einer zweiten seiner Seitenkanten (23) gedrückt wird.

## Claims

1. Supporting element (1) for supporting a display (2) against a housing (3), having a base body (4) and a cover body (5), which are connected to one another via a side body (6) made of an elastic material, wherein the base body (4) is mechanically connected directly or indirectly to the housing (3), wherein the cover body (5) butts against the display (2) and, in a state in which the display (2) is not installed in the housing (3), the cover body (5) is located in a position in which it is raised in relation to the base body (4) and from which, in the installed state, it is displaced in the direction of the base body (4), the side body (6) being deformed elastically at the same time, **characterized in that** the supporting element (1) is an integrated constituent part of a control mat (7).

2. Supporting element (1) according to Claim 1, **characterized in that** the cover body (5) and/or the side body (6) and/or the base body (4) have a circular outline in plan view.

3. Supporting element (1) according to Claim 1, **characterized in that** the cover body (5) and/or the side body (6) and/or the base body (4) have a polygonal outline in plan view.

4. Supporting element (1) according to one of the preceding claims, **characterized in that** the cover body (5) and/or the side body (6) and/or the base body (4) are configured as hollow bodies.

5. Supporting element (1) according to one of preceding Claims 1 to 3, **characterized in that** the cover body (5) and/or the side body (6) and/or the base body (4) are configured as solid bodies.

6. Supporting element (1) according to one of the preceding claims, **characterized in that** the cover body (5) and/or the base body (4) are configured from the same elastic material as the side body (6).

7. Supporting element (1) according to one of the preceding claims, **characterized in that** the elastic material is a synthetic elastic material, in particular silicone.

8. Supporting element (1) according to Claim 7, **characterized in that** the side body (6) and the cover body (5) are formed from the control mat (7), whereas the base body (4) corresponds to the region (8) which forms part of the control mat (7) and encloses the side body (6).

9. Arrangement for supporting a display (2) against a housing (3), wherein the display (2) is fastened on the housing (3) by at least one fastening unit (9), and wherein the fastening unit (9) pushes the display (2) against the housing (3) by way of a bearing surface (10), **characterized in that** a supporting element (1) according to one of Claims 1 to 8 is arranged between the bearing surface (10) of the fastening unit (9) and the display (2).

10. Arrangement according to Claim 9, **characterized in that** the supporting element (1) is configured as part of a control mat (7), wherein the control mat (7) is applied to a printed circuit board (11) belonging to a fastening unit (9).

11. Arrangement according to Claim 10, **characterized in that** the printed circuit board (11, 37) pushes the display (2) against a front portion (13, 32) of the housing (3, 31), said front portion being provided with an aperture (12, 33).

12. Arrangement according to Claim 11, **characterized in that** the control mat (36) projects beyond the display (2) by way of at least one side region (14), and **in that** the side region (14) has at least one electrically conductive contact surface (15), which can be actuated by at least one operating element (16) integrated in the housing (31), wherein activation establishes an electrical connection with at least one electrically conductive contact (34) located on the printed circuit board (37).

13. Arrangement according to either of Claims 11 and 12, **characterized in that** at least one rigidly configured positioning element (18) is fitted on the rear side (17) of the front portion (13), said rear side being directed towards the display (2), and the display (2) can have a first of its side edges (22) pushed against the positioning element.

14. Arrangement according to Claim 13, **characterized in that** at least one elastically configured positioning element (20) is fitted on the rear side (17) of the front portion (13), and the display (2) can have a second of its side edges (23) pushed against the positioning element.

## Revendications

1. Elément (1) d'appui pour l'appui d'un affichage (2) sur un boîtier (3), ayant un corps (4) de fond et un corps (5) de couverture qui sont reliés entre eux par un corps (6) latéral en un matériau élastique, le corps (4) de fond étant relié mécaniquement directement ou indirectement au boîtier (3), dans lequel le corps (5) de couverture s'applique à l'affichage (2) et le corps (5) de couverture se trouve, à l'état de l'affichage (2) non incorporé dans le boîtier (3), dans une position en saillie par rapport au corps (4) de fond, à partir de laquelle il est déplacé dans l'état incorporé dans la direction du corps (4) de fond avec déformation élastique simultanée du corps (6) latéral et **caractérisé en ce que** l'élément (1) d'appui est une partie constitutive intégrée d'un tapis (7) de commutation.

2. Elément (1) d'appui selon la revendication 1, **caractérisé en ce que** le corps (5) de couverture et/ou le corps (6) latéral et/ou le corps (4) de fond ont une projection sur un plan horizontal, qui est circulaire.

3. Elément (1) d'appui selon la revendication 1, **caractérisé en ce que** le corps (5) de couverture et/ou le corps (6) latéral et/ou le corps (4) de fond ont une projection sur un plan horizontal, qui est polygonale.

4. Elément (1) d'appui selon l'une des revendications précédentes, **caractérisé en ce que** le corps (5) de couverture et/ou le corps (6) latéral et/ou le corps (4) de font sont réalisés sous la forme de corps creux.

5. Elément (1) d'appui selon l'une des revendications précédentes 1 à 3, **caractérisé en ce que** le corps (5) de couverture et/ou le corps (6) latéral et/ou le corps (4) de fond sont réalisés sous la forme de corps pleins.

6. Elément (1) d'appui selon l'une des revendications précédentes, **caractérisé en ce que** le corps (5) de couverture et/ou le corps (4) de fond sont en la même matière élastique que le corps (6) latéral.

7. Elément (1) d'appui selon l'une des revendications précédentes, **caractérisé en ce que** la matière élastique est une matière ayant l'élasticité du caoutchouc, notamment du silicone.

8. Elément (1) d'appui selon la revendication 7, **caractérisé en ce que** le corps (6) latéral et le corps (5) de couverture sont formés en le tapis (7) de commutation, tandis que le corps (4) de fond correspond à la partie du tapis (7) de commutation qui entoure le corps (6) latéral.

9. Agencement d'appui d'un affichage (2) sur un boîtier (3), l'affichage étant fixé au boîtier (3) par au moins une unité (9) de fixation et l'unité (9) de fixation poussant par une surface (10) d'application l'affichage (2) sur le boîtier (3), **caractérisé en ce qu'**un élément (1) d'appui sur l'une des revendications 1 à 8 est disposé entre la surface (10) d'application de l'élément (9) de fixation et l'affichage (2).

10. Agencement selon la revendication 9, **caractérisé en ce que** l'élément (1) d'appui est réalisé sous la forme d'une partie d'un tapis (7) de commutation, le tapis (7) de commutation étant déposée sur une plaquette (11) à circuit imprimé appartenant à une unité (9) de fixation.

11. Agencement selon la revendication 10, **caractérisé en ce que** la plaquette (11, 37) à circuit imprimé pousse l'affichage (2) sur une partie (13, 32) avant et pourvue d'une ouverture (12, 33) formant diaphragme du boîtier (3, 31).

12. Agencement selon la revendication 11, **caractérisé en ce que** le tapis (36) de commutation dépasse par au moins une partie (14) latérale de l'affichage (2) et **en ce que** dans la partie (14) latérale est réalisée au moins une surface (15) de contact conductrice de l'électricité, qui peut être actionnée par au moins un élément (16) d'actionnement intégré au boîtier (31), dans lequel lors de l'actionnement une liaison électrique est ménagée vers au moins un contact (34) conducteur d'électricité se trouvant sur la plaquette (37) à circuit imprimé.

13. Agencement selon l'une des revendications 11 ou 12, **caractérisé en ce que** du côté (17) arrière tourné vers l'affichage (2) de la partie (13) frontale est mis au moins un élément (18) de mise en position, qui est réalisé de manière rigide et sur lequel l'affichage (2) est poussé par un premier de ses bords (22) latéraux.

14. Agencement selon la revendication 13, **caractérisé en ce que** sur le côté (17) arrière de la partie (13) frontale est mis au moins un élément (20) de mise en position, qui est réalisé élastiquement et sur lequel l'affichage (2) est poussé par un deuxième de ses bords (23) latéraux.
